# EUROPEAN PATENT SPECIFICATION

(11) **EP 3 694 642 B1**
(45) Date of publication and mention of the grant of the patent: **02.09.2026**
(21) Application number: 18803805.3
(22) Date of filing: 11.10.2018
(51) Int. Cl.: B01J 23/63, B01D 53/94, B01J 35/40, B01J 35/56, F01N 3/10

(54) **TWC CATALYSTS FOR GASOLINE EXHAUST GAS APPLICATIONS WITH IMPROVED THERMAL DURABILITY**
TWC-KATALYSATOREN FÜR BENZINABGASANWENDUNGEN MIT VERBESSERTER THERMISCHER BESTÄNDIGKEIT
CATALYSEURS TWC POUR DES APPLICATIONS DE GAZ D'ÉCHAPPEMENT D'ESSENCE AYANT UNE DURABILITÉ THERMIQUE AMÉLIORÉE

(30) Priority: 12.10.2017 US 201762571511 P
(43) Date of publication of application: 19.08.2020
(73) Proprietor: Johnson Matthey Public Limited Company, London EC2V 7AD (GB)
(72) Inventor: CHANG, Hsiao-Lan, Wayne Pennsylvania 19087 (US); CAMM, Kenneth, Wayne Pennsylvania 19087 (US); CHEN, Hai-Ying, Wayne Pennsylvania 19087 (US); HALES, Michael, Wayne Pennsylvania 19087 (US); KOO, Kwangmo, Wayne Pennsylvania 19087 (US)
(74) Representative: Johnson Matthey Public Limited Company
(86) International application number: PCT/US2018/055332
(87) International publication number: WO 2019/075154

(56) References cited:
- JP-A- 2005 313 024
- JP-A- 2014 061 461
- JP-A- H0 938 489
- US-A1- 2003 061 860
- US-A1- 2015 038 325
- US-A1- 2016 214 092

## Description

### FIELD OF THE INVENTION

The present invention relates to a catalyzed article useful in treating exhaust gas emissions from gasoline engines.

### BACKGROUND OF THE INVENTION

Internal combustion engines produce exhaust gases containing a variety of pollutants, including hydrocarbons (HCs), carbon monoxide (CO), and nitrogen oxides ("NOₓ"). Emission control systems, including exhaust gas catalysts, are widely utilized to reduce the amount of these pollutants emitted to atmosphere. A commonly used catalyst for gasoline engine applications is a three-way catalyst (TWC). TWCs perform three main functions: (1) oxidation of carbon monoxide (CO); (2) oxidation of unburnt hydrocarbons; and (3) reduction of NOₓ to N₂.

TWC catalysts require careful engine management techniques to ensure that the engine operates at or close to stoichiometric conditions (air/fuel ratio, λ=1). For technical reasons, however, it is necessary for engines to operate on either side of λ=1 at various stages during an operating cycle. When the engine is running rich, for example during acceleration, the overall exhaust gas composition is reducing in nature, and it is more difficult to carry out oxidation reactions on the catalyst surface. For this reason, TWCs have been developed to incorporate a component which stores oxygen during leaner periods of the operating cycle, and releases oxygen during richer periods of the operating cycle, thus extending the effective operating window. For such purposes, ceria-based (e.g., ceria-zirconia mixed oxides) materials are used in the vast majority of current commercial TWCs as oxygen storage components (OSC).

It is well known that with the exposure of such catalysts to high temperatures, e.g. 800 °C or above, the overall performance of the catalysts may degrade due to the sintering of both OSC material and the active precious metals. Thus, considerable efforts have been made to enhance the thermal stability of the OSC material. One strategy is to introduce other rare earth ions into the OSC material, commonly done by using soluble rare earth metal precursor solutions as dopants.

Despite advances in TWC technology, there remains a need for improved catalytic converters for certain engine platforms that produce high conversion rates with improved thermal stability. This invention solves these needs amongst others.

### SUMMARY OF THE INVENTION

One aspect of the present disclosure is directed to a catalyst article for treating exhaust gas according to claim 1.

The disclosure also encompasses an exhaust system for internal combustion engines that comprises the three-way catalyst component of the invention.

The disclosure also encompasses treating an exhaust gas from an internal combustion engine, in particular for treating exhaust gas from a gasoline engine. The method comprises contacting the exhaust gas with the three-way catalyst component of the invention.

Another aspect of the present disclosure is directed to a composition comprising a ceria-zirconia mixed oxide and a rare earth metal oxide, wherein the specific surface area of the composition is increased at least 15% after calcination at 1000 °C for 10 hours under air, in comparison with the ceria-zirconia mixed oxides, and wherein the rare earth metal oxide is Nd₂O₃, Y₂O₃, Pr₆O₁₁, or a mixture thereof.

Another aspect of the present disclosure is directed to a composition comprising a ceria-zirconia mixed oxide, a rare earth metal oxide, and a platinum group metal (PGM) component, wherein the specific surface area of the composition is increased at least 35% after calcination at 1000 °C for 10 hours under air, in comparison with a mixture of the ceria-zirconia mixed oxides and the PGM component, and wherein the rare earth metal oxide is Nd₂O₃, Y₂O₃, Pr₆O₁₁, or a mixture thereof.

Another aspect of the present disclosure is directed to a composition comprising a ceria-zirconia mixed oxide and a rare earth metal oxide, wherein the specific surface area of the composition is increased at least 5% after calcination at 1100 °C for 10 hours under air, in comparison with the ceria-zirconia mixed oxides, and wherein the rare earth metal oxide is Nd₂O₃, Y₂O₃, Pr₆O₁₁, or a mixture thereof.

Another aspect of the present disclosure is directed to a composition comprising a ceria-zirconia mixed oxide, a rare earth metal oxide, and a platinum group metal (PGM) component, wherein the specific surface area of the composition is increased at least 20% after calcination at 1100 °C for 10 hours under air, in comparison with a mixture of the ceria-zirconia mixed oxides and the PGM component, and wherein the rare earth metal oxide is Nd₂O₃, Y₂O₃, Pr₆O₁₁, or a mixture thereof.

Another aspect of the present disclosure is directed to a composition comprising a ceria-zirconia mixed oxide and a rare earth metal oxide, wherein the specific surface area of the composition is increased at least 10% after calcination at 1000 °C for 10 hours under redox conditions, in comparison with the ceria-zirconia mixed oxides, and wherein the rare earth metal oxide is Nd₂O₃, Y₂O₃, Pr₆O₁₁, or a mixture thereof.

Another aspect of the present disclosure is directed to a composition comprising a ceria-zirconia mixed oxide, a rare earth metal oxide, and a platinum group metal (PGM) component, wherein the specific surface area of the composition is increased at least 10% after calcination at 1000 °C for 10 hours under redox conditions, in comparison with a mixture of the ceria-zirconia mixed oxides and the PGM component, and wherein the rare earth metal oxide is Nd₂O₃, Y₂O₃, Pr₆O₁₁, or a mixture thereof.

Another aspect of the present disclosure is directed to a composition comprising a ceria-zirconia mixed oxide and a rare earth metal oxide, wherein the specific surface area of the composition is increased at least 10% after calcination at 1100 °C for 10 hours under redox conditions, in comparison with the ceria-zirconia mixed oxides, and wherein the rare earth metal oxide is Nd₂O₃, Y₂O₃, Pr₆O₁₁, or a mixture thereof.

Another aspect of the present disclosure is directed to a composition comprising a ceria-zirconia mixed oxide, a rare earth metal oxide, and a platinum group metal (PGM) component, wherein the specific surface area of the composition is increased at least 10% after calcination at 1100 °C for 10 hours under redox conditions, in comparison with a mixture of the ceria-zirconia mixed oxides and the PGM component, and wherein the rare earth metal oxide is Nd₂O₃, Y₂O₃, Pr₆O₁₁, or a mixture thereof.

### DETAILED DESCRIPTION OF THE INVENTION

The present invention is directed to the catalytic treatment of combustion exhaust gas, such as that produced by gasoline and other engines, and to related catalytic articles and systems. More specifically, the invention relates the simultaneous treatment of NOₓ, CO, and HC in a vehicular exhaust system. Surprisingly, the inventors have discovered that by incorporating rare earth metal oxides with an average diameter (d₅₀) of more than 100 nm into the catalyst, the catalyst of the present invention demonstrated high thermal durability while maintaining a high level of TWC performance.

One aspect of the present disclosure is directed to a catalyst article for treating exhaust gas comprising: a substrate; and a catalytic region on the substrate; wherein the catalytic region comprises a first platinum group metal (PGM) component, an oxygen storage component (OSC) material, a rare earth metal oxide, and an inorganic oxide; and wherein the rare earth metal oxide has an average diameter (d₅₀) of more than 100 nm.

The first PGM is preferably selected from the group consisting of palladium, platinum, rhodium, and mixtures thereof. Particularly preferably, the first PGM is palladium.

The catalytic region preferably comprises 0.03 to 10 weight percent of the first PGM, more preferably 0.03 to 7 weight percent of the first PGM, and most preferably 0.03 to 4 weight percent of the first PGM, based on the total weight of the catalytic region.

In the embodiments wherein the first PGM is palladium, the catalytic region preferably comprises 0.03 to 10 weight percent of palladium, more preferably 0.03 to 7 weight percent of palladium, and most preferably 0.03 to 4 weight percent of palladium, based on the total weight of the catalytic region.

The OSC material is selected from the group consisting of cerium oxide, a ceria-zirconia mixed oxide, and an alumina-ceria-zirconia mixed oxide. Preferably the OSC material is the ceria-zirconia mixed oxide. The ceria-zirconia mixed oxide can have a molar ratio of zirconia to ceria from 9:1 to 1:9; preferably, from 8:2 to 2:8; more preferably, from 7:3 to 3:7.

The OSC material (e.g., ceria-zirconia mixed oxide) can be in the range of 20-80%, based on the total weight of the catalytic region.

The rare earth metal oxide is in the range of 2-20% of the weight of the OSC material, preferably 5-15%, more preferably 8-12%.

The rare earth metal oxide is selected from the group consisting of Pr₆O₁₁, Nd₂O₃, Y₂O₃, and a mixture thereof. More preferably, the rare earth metal oxide is Nd₂O₃, Y₂O₃, or a mixture thereof. Most preferably, the rare earth metal oxide is Nd₂O₃.

The average diameter of the rare earth metal oxide in the catalytic region can be at least or more than 500 nm. In some embodiments, the average diameter of the rare earth metal oxide in the catalytic region can be at least or more than 1 µm, 2 µm, 3 µm, 4 µm, 5 µm, or 6 µm. In other embodiments, the average diameter of the rare earth metal oxide in the catalytic region can be at least or more than 7 µm. In yet other embodiments, the average diameter of the rare earth metal oxide in the catalytic region can be at least or more than 8 µm.

The inorganic oxide is preferably an oxide of Groups 2, 3, 4, 5, 13 and 14 elements. The inorganic oxide is preferably selected from the group consisting of alumina, lanthanide-stabilized alumina, alkaline earth stabilized alumina, silica, aluminosilicates, a magnesia/alumina composite oxide, titania, niobia, tantalum oxides, neodymium oxide, yttrium oxide, lanthanides, and mixed oxides or composite oxides thereof. Particularly preferably, the inorganic oxide is alumina, a lanthanide-stabilized alumina, or a magnesia/alumina composite oxide. One especially preferred inorganic oxide is alumina or a lanthanide-stabilized alumina.

The inorganic oxides preferably have a surface area in the range 10 to 1500 m²/g, pore volumes in the range 0.1 to 4 mL/g, and pore diameters from about 10 to 1000 Angstroms. High surface area inorganic oxides having a surface area greater than 80 m²/g are particularly preferred, e.g. high surface area alumina. Other preferred inorganic oxides include magnesia/alumina composite oxides, optionally further comprising a cerium-containing component, e.g. ceria. In such cases the ceria may be present on the surface of the magnesia/alumina composite oxide, e.g. as a coating.

Alternatively, the OSC material and the inorganic oxide can have a weight ratio of 10:1 to 1:10; preferably, 8:1 to 1:8 or 5:1 to 1:5; more preferably, 4:1 to 1:4 or 3:1 to 1:3; and most preferably, 2:1 to 1:2.

The catalytic region may further comprise an alkali or alkali earth metal. In some embodiments, the alkali or alkali earth metal may be deposited on the OSC material. Alternatively, or in addition, the alkali or alkali earth metal may be deposited on the inorganic oxide. That is, in some embodiments, the alkali or alkali earth metal may be deposited on, i.e. present on, both the OSC material and the inorganic oxide.

The alkali or alkali earth metal is generally in contact with the inorganic oxide. Preferably the alkali or alkali earth metal is supported on the inorganic oxide. In addition to, or alternatively to, being in contact with the inorganic oxide, the alkali or alkali earth metal may be in contact with the OSC material.

The alkali or alkali earth metal is preferably barium or strontium. More preferably, the barium, where present, is less than 30%; most preferably, less than 20%; based on the total weight of the catalytic region.

The total washcoat loading of the catalytic region can be 6.1-305 g/l, preferably 30.5-244 g/l, more preferably 61-183 g/l, most preferably 91.5-152.6 g/l (0.1-5 g/in³, preferably 0.5-4 g/in³, more preferably 1-3 g/in³, most preferably 1.5-2.5 g/in³).

The catalytic region may further comprise a second PGM component.

The second PGM is preferably selected from the group consisting of palladium, platinum, rhodium, and a mixture thereof. Particularly preferably, the second PGM component is rhodium if the first PGM component is palladium.

In some embodiments, the palladium component and the rhodium component has a weight ratio of from 200:1 to 1:200. Preferably, the palladium component and the rhodium component has a weight ratio of from 100:1 to 1:100. More preferably, the palladium component and the rhodium component has a weight ratio of from 50:1 to 1:50.

In certain embodiments, the catalytic region is essentially free of PGM metals other than the palladium component.

The catalytic region of the invention may comprise further components that are known to the skilled person. For example, the compositions of the invention may further comprise at least one binder and/or at least one surfactant. Where a binder is present, dispersible alumina binders are preferred.

The substrate can be a metal or ceramic substrate. Preferably the substrate is a flow-through monolith or a filter monolith.

The monolith substrate acts as a support for holding catalytic material. Suitable materials for forming the monolith substrate include ceramic-like materials such as cordierite, silicon carbide, silicon nitride, zirconia, mullite, spodumene, alumina-silica magnesia or zirconium silicate, or of porous, refractory metal. Such materials and their use in the manufacture of porous monolith substrates is well known in the art.

When the monolith is a filtering monolith, it is preferred that the filtering monolith is a wall-flow filter. In a wall-flow filter, each inlet channel is alternately separated from an outlet channel by a wall of the porous structure and vice versa. It is preferred that the inlet channels and the outlet channels are arranged in a honeycomb arrangement. When there is a honeycomb arrangement, it is preferred that the channels vertically and laterally adjacent to an inlet channel are plugged at an upstream end and vice versa (i.e. the channels vertically and laterally adjacent to an outlet channel are plugged at a downstream end). When viewed from either end, the alternately plugged and open ends of the channels take on the appearance of a chessboard.

The substrate may be an electrically heatable substrate (i.e. the electrically heatable substrate is an electrically heating substrate, in use). When the substrate is an electrically heatable substrate, the catalyst article of the invention comprises an electrical power connection, preferably at least two electrical power connections, more preferably only two electrical power connections. Each electrical power connection may be electrically connected to the electrically heatable substrate and an electrical power source. The catalyst article can be heated by Joule heating, where an electric current through a resistor converts electrical energy into heat energy.

In general, the electrically heatable substrate comprises a metal. The metal may be electrically connected to the electrical power connection or electrical power connections.

Typically, the electrically heatable substrate is an electrically heatable honeycomb substrate. The electrically heatable substrate may be an electrically heating honeycomb substrate, in use.

The electrically heatable substrate may comprise an electrically heatable substrate monolith (e.g. a metal monolith). The monolith may comprise a corrugated metal sheet or foil. The corrugated metal sheet or foil may be rolled, wound or stacked. When the corrugated metal sheet is rolled or wound, then it may be rolled or wound into a coil, a spiral shape or a concentric pattern.

The metal of the electrically heatable substrate, the metal monolith and/or the corrugated metal sheet or foil may comprise an aluminium ferritic steel, such as Fecralloy^{™}.

The catalysts of the invention may be prepared by any suitable means. For example, the catalyst may be prepared by mixing first PGM, an optional first alkali or alkali earth metal or second PGM, an inorganic oxide, an OSC material and a rare earth metal oxide in any order. The manner and order of addition is not considered to be particularly critical. For example, each of the components of the catalyst may be added to any other component or components simultaneously, or may be added sequentially in any order. Each of the components of the catalyst may be added to any other component of the catalyst by impregnation, adsorption, ion-exchange, incipient wetness, precipitation, or the like, or by any other means commonly known in the art.

The rare earth metal oxide is incorporated in to the catalytic region by physical blend, not as dopant.

The rare earth metal oxide can be added into the mixture as the last major ingredient.

Preferably, the catalyst as hereinbefore described is prepared by depositing the catalyst on the substrate using washcoating procedures. A representative process for preparing the catalyst using a washcoat procedure is set forth below. It will be understood that the process below can be varied according to different embodiments of the invention.

The washcoating is preferably performed by first slurrying finely divided particles of the components of the catalyst as hereinbefore defined in an appropriate solvent, preferably water, to form a slurry. The slurry preferably contains between 5 to 70 weight percent solids, more preferably between 10 to 50 weight percent. Preferably, the particles are milled or subject to another comminution process in order to ensure that substantially all of the solid particles have a particle size of less than 20 microns in an average diameter, prior to forming the slurry. Additional components, such as stabilizers, binders, surfactants or promoters, may also be incorporated in the slurry as a mixture of water soluble or water-dispersible compounds or complexes.

The substrate may then be coated one or more times with the slurry such that there will be deposited on the substrate the desired loading of the catalyst.

Alternatively, the catalyst article of the present invention may further comprise a second catalytic region, such as a second catalytic region described below. The catalytic region described above is referred to below as the first catalytic region. Thus, the catalyst article comprises a first catalytic region and a second catalytic region. For the avoidance of doubt, the first catalytic region is different (i.e. different composition) to the second catalytic region.

In a first arrangement, the first catalytic region is a first catalytic layer and the second catalytic region is a second catalytic layer. The first catalytic layer may be disposed or supported (e.g. directly disposed or supported) on the second catalytic layer. Alternatively, the second catalytic layer may be disposed or supported (e.g. directly disposed or supported) on the first catalytic layer. It is preferred that the second catalytic layer is disposed or supported (e.g. directly disposed or supported) on the first catalytic layer.

The first catalytic layer typically extends for an entire length (i.e. substantially an entire length) of the substrate, particularly the entire length of the channels of a substrate monolith.

The second catalytic layer typically extends for an entire length (i.e. substantially an entire length) of the substrate, particularly the entire length of the channels of a substrate monolith.

In a second arrangement, the first catalytic region is a first catalytic zone and the second catalytic region is a second catalytic zone. The first catalytic zone may be disposed upstream of the second catalytic zone. Alternatively, the second catalytic zone may be disposed upstream of the first catalytic zone. It is preferred that the first catalytic zone is disposed upstream of the second catalytic zone.

The first catalytic zone may adjoin the second catalytic zone or there may be a gap (e.g. a space) between the first catalytic zone and the second catalytic zone. Preferably, the first catalytic zone is in contact with the second catalytic zone. When the first catalytic zone adjoins and/or is in contact with the second catalytic zone, then the combination of the first catalytic zone and the second catalytic zone may be disposed or supported on the substrate as a layer. Thus, a layer may be formed on the substrate when the first and second catalytic zones adjoin or are in contact with one another. Such an arrangement may avoid problems with back pressure.

The first catalytic zone typically has a length of 10 to 90 % of the length of the substrate, preferably 15 to 75 % of the length of the substrate, more preferably 20 to 70 % of the length of the substrate, still more preferably 25 to 65 %.

The second catalytic zone typically has a length of 10 to 90 % of the length of the substrate, preferably 15 to 75 % of the length of the substrate, more preferably 20 to 70 % of the length of the substrate, still more preferably 25 to 65 %.

The first catalytic zone and the second catalytic zone may be disposed or supported (e.g. directly disposed or supported) on the substrate.

In a third arrangement, the second catalytic region is disposed or supported (e.g. directly disposed or supported) on the first catalytic region.

The first catalytic region may be disposed or supported (e.g. directly disposed or supported) on the substrate.

An entire length (e.g. all) of the second catalytic region may be disposed or supported (e.g. directly disposed or supported) on the first catalytic region. Alternatively, a part or portion of the length of the second catalytic region may be disposed or supported (e.g. directly disposed or supported) on the first catalytic region. A part or portion (e.g. the remaining part or portion) of the length of the second catalytic region may be disposed or supported (e.g. directly disposed or supported) on the substrate.

The second catalytic region may be a second catalytic layer and the first catalytic region may be a first catalytic zone. The entire length of the second catalytic zone is preferably disposed or supported on the first catalytic layer. The first catalytic layer may be disposed or supported (e.g. directly disposed or supported) on the substrate.

The first catalytic layer typically extends for an entire length (i.e. substantially an entire length) of the substrate, particularly the entire length of the channels of a substrate monolith.

The second catalytic zone typically has a length of 10 to 90 % of the length of the substrate, preferably 15 to 75 % of the length of the substrate, more preferably 20 to 70 % of the length of the substrate, still more preferably 25 to 65 %.

The second catalytic zone may be disposed at or near an inlet end of the substrate. The second catalytic zone may be disposed at or near an outlet end of the substrate. It is preferred that the second catalytic zone is disposed at or near an outlet end of the substrate.

In an alternative third arrangement, the second catalytic region is a second catalytic zone and the first catalytic region is a first catalytic zone or a first catalytic layer. The second catalytic zone or the second catalytic layer is disposed or supported (e.g. directly disposed or supported) on the first catalytic zone.

The first catalytic zone typically has a length of 10 to 90 % of the length of the substrate preferably 15 to 75 % of the length of the substrate, more preferably 20 to 70 % of the length of the substrate, still more preferably 25 to 65 %.

The second catalytic zone may be disposed at or near an outlet end of the substrate. The second catalytic zone may be disposed at or near an inlet end of the substrate. It is preferred that the second catalytic zone is disposed at or near an outlet end of the substrate.

In addition to being disposed or supported on the first catalytic zone, the second catalytic zone or the second catalytic layer may be disposed or supported (e.g. directly disposed or supported) on the substrate. Thus, a part or portion of the length of the second catalytic zone or the second catalytic layer may be disposed or supported (e.g. directly disposed or supported) on the first catalytic zone and a part or portion (e.g. the remaining part or portion) of the length of the second catalytic zone or the second catalytic layer may be disposed or supported (e.g. directly disposed or supported) on the substrate.

In the alternative third arrangement, when the first catalytic region is a first catalytic zone, then the first catalytic zone typically has a length of 10 to 90 % of the length of the substrate, preferably 15 to 75 % of the length of the substrate, more preferably 20 to 70 % of the length of the substrate, still more preferably 25 to 65 %.

The first catalytic zone may be disposed at or near an inlet end of the substrate. The first catalytic zone may be disposed at or near an outlet end of the substrate. It is preferred that the first catalytic zone is disposed at or near an inlet end of the substrate.

In the alternative third arrangement, when the first catalytic region is a first catalytic layer, then the first catalytic layer typically extends for an entire length (i.e. substantially an entire length) of the substrate, particularly the entire length of the channels of a substrate monolith. When the first catalytic region is a first catalytic layer, then preferably the second catalytic zone is disposed at or near an outlet end of the substrate.

In a fourth arrangement, the first catalytic region is disposed or supported on the second catalytic region.

The second catalytic region may be disposed or supported (e.g. directly disposed or supported) on the substrate.

An entire length (e.g. all) of the first catalytic region may be disposed or supported (e.g. directly disposed or supported) on the second catalytic region. Alternatively, a part or portion of the length of the first catalytic region may be disposed or supported (e.g. directly disposed or supported) on the second catalytic region. A part or portion (e.g. the remaining part or portion) of the length of the first catalytic region may be disposed or supported (e.g. directly disposed or supported) on the substrate.

The first catalytic region may be a first catalytic layer and the second catalytic region may be a second catalytic zone. The entire length of the first catalytic zone is preferably disposed or supported on the second catalytic layer.

The second catalytic layer typically extends for an entire length (i.e. substantially an entire length) of the substrate, particularly the entire length of the channels of a substrate monolith.

The first catalytic zone typically has a length of 10 to 90 % of the length of the substrate, preferably 15 to 75 % of the length of the substrate, more preferably 20 to 70 % of the length of the substrate, still more preferably 25 to 65 %.

The first catalytic zone may be disposed at or near an inlet end of the substrate. The first catalytic zone may be disposed at or near an outlet end of the substrate. It is preferred that the first catalytic zone is disposed at or near an inlet end of the substrate.

In an alternative fourth arrangement, the first catalytic region is a first catalytic zone and the second catalytic region is a second catalytic zone or a second catalytic layer. The first catalytic zone or the first catalytic layer is disposed or supported (e.g. directly disposed or supported) on the second catalytic zone.

The second catalytic zone typically has a length of 10 to 90 % of the length of the substrate, preferably 15 to 75 % of the length of the substrate, more preferably 20 to 70 % of the length of the substrate, still more preferably 25 to 65 %.

An entire length (e.g. all) of the second catalytic zone may be disposed or supported (e.g. directly disposed or supported) on the substrate.

The second catalytic zone may be disposed at or near an outlet end of the substrate. The second catalytic zone may be disposed at or near an inlet end of the substrate. It is preferred that the second catalytic zone is disposed at or near an outlet end of the substrate.

In addition to being disposed or supported on the second catalytic zone, the first catalytic zone or the first catalytic layer may be disposed or supported (e.g. directly disposed or supported) on the substrate. Thus, a part or portion of the length of the first catalytic zone or the first catalytic layer may be disposed or supported (e.g. directly disposed or supported) on the second catalytic zone and a part or portion (e.g. the remaining part or portion) of the length of the first catalytic zone or the first catalytic layer may be disposed or supported (e.g. directly disposed or supported) on the substrate.

In the alternative fourth arrangement, when the first catalytic region is a first catalytic zone, then the first catalytic zone typically has a length of 10 to 90 % of the length of the substrate, preferably 15 to 75 % of the length of the substrate, more preferably 20 to 70 % of the length of the substrate, still more preferably 25 to 65 %.

The first catalytic zone may be disposed at or near an inlet end of the substrate. The first catalytic zone may be disposed at or near an outlet end of the substrate. It is preferred that the second catalytic zone is disposed at or near an inlet end of the substrate.

In the alternative fourth arrangement, when the first catalytic region is a first catalytic layer, then the first catalytic layer typically extends for an entire length (i.e. substantially an entire length) of the substrate, particularly the entire length of the channels of a substrate monolith. When the first catalytic region is a first catalytic layer, then preferably the second catalytic zone is disposed at or near an outlet end of the substrate.

The second catalytic region may comprise a noble metal component, a second OSC material, and a second inorganic oxide.

The noble metal component is preferably selected from the group consisting of palladium, platinum, rhodium, and mixtures thereof. Particularly preferably, the noble metal component is rhodium.

The second catalytic region preferably comprises 0.03 to 1.5 weight percent of the noble metal component; more preferably, 0.03 to 1 weight percent of the noble metal component; and most preferably, 0.03 to 0.5 weight percent of the noble metal component; based on the total weight of the second catalytic region.

In the embodiments wherein the noble metal is rhodium, the second catalytic region preferably comprises 0.03 to 1.5 weight percent of rhodium; more preferably, 0.03 to 1 weight percent of rhodium; and most preferably, 0.03 to 0.5 weight percent of rhodium; based on the total weight of the second catalytic region.

The second OSC material is preferably selected from the group consisting of cerium oxide, a ceria-zirconia mixed oxide, and an alumina-ceria-zirconia mixed oxide. Preferably the second OSC material is the ceria-zirconia mixed oxide. The ceria-zirconia mixed oxide can have a molar ratio of zirconia to ceria at least 5:5; preferably, at least 6:4, more preferably, at least 7:3.

The second OSC material (e.g., ceria-zirconia mixed oxide) can be 20-80%, based on the total weight in the second catalytic region.

The second inorganic oxides preferably have a surface area in the range 10 to 1500 m²/g, pore volumes in the range 0.1 to 4 mL/g, and pore diameters from about 10 to 1000 Angstroms. High surface area inorganic oxides having a surface area greater than 80 m²/g are particularly preferred, e.g. high surface area alumina. Other preferred inorganic oxides include magnesia/alumina composite oxides, optionally further comprising a cerium-containing component, e.g. ceria. In such cases the ceria may be present on the surface of the magnesia/alumina composite oxide, e.g. as a coating.

The second OSC material and the second inorganic oxide can have a weight ratio of 9:1 to 1:9; preferably, 8:2 to 2:8; and more preferably, 7:3 to 3:7.

The total washcoat loading of the second catalytic region can be 12.2-244 g/l, preferably 30.5-183 g/l, and more preferably 61-122 g/l (0.2-4 g/in³, preferably 0.5-3 g/in³, and more preferably 61-122 g/in³).

The second catalytic region may further comprise a second noble metal component.

The second noble metal is preferably selected from the group consisting of palladium, platinum, rhodium, and a mixture thereof. Particularly preferably, the second noble metal component is palladium if the noble metal component is rhodium.

In some embodiments, the palladium component and the rhodium component has a weight ratio of from 10:1 to 1:10. More preferably, the palladium component and the rhodium component has a weight ratio of from 8:1 to 1:8. Most preferably, the palladium component and the rhodium component has a weight ratio of from 5:1 to 1:5.

In certain embodiments, the second catalytic region is essentially free of noble metals other than the rhodium component.

The second catalytic region of the invention may comprise further components that are known to the skilled person. For example, the compositions of the invention may further comprise at least one binder and/or at least one surfactant. Where a binder is present, dispersible alumina binders are preferred.

The regions, zones and layers described hereinabove may be prepared using conventional methods for making and applying washcoats onto a substrate are also known in the art (see, for example, our WO 99/47260, WO 2007/077462 and WO 2011/080525).

Another aspect of the present disclosure is directed to a method for treating a vehicular exhaust gas containing NOₓ, CO, and HC using the catalyst article described herein. Catalytic converters equipped with TWC made according to this method show improved catalytic performance compared to conventional TWC (for example, see Examples 15 and 16 and Tables 3 and 4).

Another aspect of the present disclosure is directed to a system for treating vehicular exhaust gas comprising the catalyst article described herein in conjunction with a conduit for transferring the exhaust gas through the system.

The system can comprise a second catalyst article. Preferably, the second catalyst article can comprise a gasoline particulate filter (GPF) or a TWC. More preferably, the second catalyst article is placed downstream of the first catalyst article.

The TWC catalyst can be any conventional TWC catalyst.

Another aspect of the present disclosure is directed to a composition comprising a ceria-zirconia mixed oxide and a rare earth metal oxide, wherein the specific surface area of the composition is increased at least 15% after calcination at 1000 °C for 10 hours under air, in comparison with the ceria-zirconia mixed oxides, and wherein the rare earth metal oxide is Nd₂O₃, Y₂O₃, Pr₆O₁₁, or a mixture thereof.

Through intensive researches, the inventors have found out that the addition of the rare earth metal oxides incorporated as the physical blends significantly improved the compositions' high temperature thermal stability, in comparison with the bare OSC materials or even with the OSC material doped with the rare earth metal precursors.

The composition comprises 2-20 wt.% of the rare earth metal oxide, based on the total weight of the composition. More preferably, the composition comprises 5-15 wt.% of the rare earth metal oxide, based on the total weight of the composition. Most preferably, the composition can comprise 8-12 wt.% of the rare earth metal oxide based on the total weight of the composition.

The rare earth metal oxide is selected from the group consisting of Pr₆O₁₁, Nd₂O₃, Y₂O₃, and a mixture thereof. More preferably, the rare earth metal oxide is Nd₂O₃, Y₂O₃, or a mixture thereof. Most preferably, the rare earth metal oxide is Nd₂O₃.

The rare earth metal oxide has an average diameter (d₅₀) of more than 100 nm. The average diameter of the rare earth metal oxide in the composition can be at least or more than 500 nm. In some embodiments, the average diameter of the rare earth metal oxide in the composition can be at least or more than 1 µm, 2 µm, 3 µm, 4 µm, 5 µm, or 6 µm. In other embodiments, the average diameter of the rare earth metal oxide in the composition can be at least or more than 7 µm. In yet other embodiments, the average diameter of the rare earth metal oxide in the composition can be at least or more than 8 µm.

The ceria-zirconia mixed oxide can have a molar ratio of zirconia to ceria from 9:1 to 1:9; preferably, from 8:2 to 2:8; more preferably, from 7:3 to 3:7.

The specific surface area of the composition can be increased at least 20% or at least 25% after calcination at 1000 °C for 10 hours under air. In some embodiments, the specific surface area of the composition can be increased at least 30% or at least 40% after calcination at 1000 °C for 10 hours under air. In other embodiments, the specific surface area of the composition can be increased at least 45% or at least 50% after calcination at 1000 °C for 10 hours under air.

Another aspect of the present disclosure is directed to a composition comprising a ceria-zirconia mixed oxide and a rare earth metal oxide, wherein the specific surface area of the composition is increased at least 5% after calcination at 1100 °C for 10 hours under air, in comparison with the ceria-zirconia mixed oxides, and wherein the rare earth metal oxide is Nd₂O₃, Y₂O₃, Pr₆O₁₁, or a mixture thereof.

The composition comprises 2-20 wt.% of the rare earth metal oxide, based on the total weight of the composition. More preferably, the composition comprises 5-15 wt.% of the rare earth metal oxide, based on the total weight of the composition. Most preferably, the composition can comprise 8-12 wt.% of the rare earth metal oxide based on the total weight of the composition.

The rare earth metal oxide is selected from the group consisting of Pr₆O₁₁, Nd₂O₃, Y₂O₃, and a mixture thereof. More preferably, the rare earth metal oxide is Nd₂O₃, Y₂O₃, or a mixture thereof. Most preferably, the rare earth metal oxide is Nd₂O₃.

The rare earth metal oxide has an average diameter (d₅₀) of more than 100 nm. The average diameter of the rare earth metal oxide in the composition can be at least or more than 500 nm. In some embodiments, the average diameter of the rare earth metal oxide in the composition can be at least or more than 1 µm, 2 µm, 3 µm, 4 µm, 5 µm, or 6 µm. In other embodiments, the average diameter of the rare earth metal oxide in the composition can be at least or more than 7 µm. In yet other embodiments, the average diameter of the rare earth metal oxide in the composition can be at least or more than 8 µm.

The ceria-zirconia mixed oxide can have a molar ratio of zirconia to ceria from 9:1 to 1:9; preferably, from 8:2 to 2:8; more preferably, from 7:3 to 3:7.

The specific surface area of the composition preferably can be increased at least 10% or at least 15% after calcination at 1100 °C for 10 hours under air. In some embodiments, the specific surface area of the composition can be increased at least 20% or at least 25% after calcination at 1100 °C for 10 hours under air.

Another aspect of the present disclosure is directed to a composition comprising a ceria-zirconia mixed oxide and a rare earth metal oxide, wherein the specific surface area of the composition is increased at least 10% after calcination at 1000 °C for 10 hours under redox conditions, in comparison with the ceria-zirconia mixed oxides, and wherein the rare earth metal oxide is Nd₂O₃, Y₂O₃, Pr₆O₁₁, or a mixture thereof.

The composition comprises 2-20 wt.% of the rare earth metal oxide, based on the total weight of the composition. More preferably, the composition comprises 5-15 wt.% of the rare earth metal oxide, based on the total weight of the composition. Most preferably, the composition can comprise 8-12 wt.% of the rare earth metal oxide based on the total weight of the composition.

Preferably, the rare earth metal oxide is selected from the group consisting of Pr₆O₁₁, Nd₂O₃, Y₂O₃, and a mixture thereof. More preferably, the rare earth metal oxide is Nd₂O₃, Y₂O₃, or a mixture thereof. Most preferably, the rare earth metal oxide is Nd₂O₃.

The rare earth metal oxide has an average diameter (d₅₀) of more than 100 nm. The average diameter of the rare earth metal oxide in the composition can be at least or more than 500 nm. In some embodiments, the average diameter of the rare earth metal oxide in the composition can be at least or more than 1 µm, 2 µm, 3 µm, 4 µm, 5 µm, or 6 µm. In other embodiments, the average diameter of the rare earth metal oxide in the composition can be at least or more than 7 µm. In yet other embodiments, the average diameter of the rare earth metal oxide in the composition can be at least or more than 8 µm.

The ceria-zirconia mixed oxide can have a molar ratio of zirconia to ceria from 9:1 to 1:9; preferably, from 8:2 to 2:8; more preferably, from 7:3 to 3:7.

The specific surface area of the composition can be increased at least 15% or at least 20% after calcination at 1000 °C for 10 hours under redox conditions. In some embodiments, the specific surface area of the composition can be increased at least 25% or at least 30% after calcination at 1000 °C for 10 hours under redox conditions.

Another aspect of the present disclosure is directed to a composition comprising a ceria-zirconia mixed oxide and a rare earth metal oxide, wherein the specific surface area of the composition is increased at least 10% after calcination at 1100 °C for 10 hours under redox conditions, in comparison with the ceria-zirconia mixed oxides, and wherein the rare earth metal oxide is Nd₂O₃, Y₂O₃, Pr₆O₁₁, or a mixture thereof.

The composition comprises 2-20 wt.% of the rare earth metal oxide, based on the total weight of the composition. More preferably, the composition comprises 5-15 wt.% of the rare earth metal oxide, based on the total weight of the composition. Most preferably, the composition can comprise 8-12 wt.% of the rare earth metal oxide based on the total weight of the composition.

Preferably, the rare earth metal oxide is selected from the group consisting of Pr₆O₁₁, Nd₂O₃, Y₂O₃, and a mixture thereof. More preferably, the rare earth metal oxide is Nd₂O₃, Y₂O₃, or a mixture thereof. Most preferably, the rare earth metal oxide is Nd₂O₃.

The rare earth metal oxide has an average diameter (d₅₀) of more than 100 nm. The average diameter of the rare earth metal oxide in the composition can be at least or more than 500 nm. In some embodiments, the average diameter of the rare earth metal oxide in the composition can be at least or more than 1 µm, 2 µm, 3 µm, 4 µm, 5 µm, or 6 µm. In other embodiments, the average diameter of the rare earth metal oxide in the composition can be at least or more than 7 µm. In yet other embodiments, the average diameter of the rare earth metal oxide in the composition can be at least or more than 8 µm.

The ceria-zirconia mixed oxide can have a molar ratio of zirconia to ceria from 9:1 to 1:9; preferably, from 8:2 to 2:8; more preferably, from 7:3 to 3:7.

The specific surface area of the composition can be increased at least 15% or at least 20% after calcination at 1100 °C for 10 hours under redox conditions. In some embodiments, the specific surface area of the composition can be increased at least 25% or at least 30% after calcination at 1000 °C for 10 hours under redox conditions. In other embodiments, the specific surface area of the composition can be increased at least 35% or at least 40% after calcination at 1000 °C for 10 hours under redox conditions.

Another aspect of the present disclosure is directed to a composition comprising a ceria-zirconia mixed oxide, a rare earth metal oxide, and a platinum group metal (PGM) component, wherein the specific surface area of the composition is increased at least 35% after calcination at 1000 °C for 10 hours under air, in comparison with a mixture of the ceria-zirconia mixed oxides and the PGM component, and wherein the rare earth metal oxide is Nd₂O₃, Y₂O₃, Pr₆O₁₁, or a mixture thereof.

The composition comprises 2-20 wt.% of the rare earth metal oxide, based on the total weight of the composition. More preferably, the composition comprises 5-15 wt.% of the rare earth metal oxide, based on the total weight of the composition. Most preferably, the composition can comprise 8-12 wt.% of the rare earth metal oxide based on the total weight of the composition.

Preferably, the rare earth metal oxide is selected from the group consisting of Pr₆O₁₁, Nd₂O₃, Y₂O₃, and a mixture thereof. More preferably, the rare earth metal oxide is Nd₂O₃, Y₂O₃, or a mixture thereof. Most preferably, the rare earth metal oxide is Nd₂O₃.

The rare earth metal oxide has an average diameter (d₅₀) of more than 100 nm. The average diameter of the rare earth metal oxide in the composition can be at least or more than 500 nm. In some embodiments, the average diameter of the rare earth metal oxide in the composition can be at least or more than 1 µm, 2 µm, 3 µm, 4 µm, 5 µm, or 6 µm. In other embodiments, the average diameter of the rare earth metal oxide in the composition can be at least or more than 7 µm. In yet other embodiments, the average diameter of the rare earth metal oxide in the composition can be at least or more than 8 µm.

The ceria-zirconia mixed oxide can have a molar ratio of zirconia to ceria from 9:1 to 1:9; preferably, from 8:2 to 2:8; more preferably, from 7:3 to 3:7.

The PGM is preferably selected from the group consisting of palladium, platinum, rhodium, and mixtures thereof. Particularly preferably, the PGM is palladium.

The composition preferably comprises 0.03 to 10 weight percent of the PGM, more preferably 0.03 to 7 weight percent of the PGM, and most preferably 0.03 to 4 weight percent of the PGM, based on the weight of the composition.

In the embodiments wherein the PGM is palladium, the composition preferably comprises 0.03 to 10 weight percent of palladium, more preferably 0.03 to 7 weight percent of palladium, and most preferably 0.03 to 4 weight percent of palladium, based on the weight of the composition.

The specific surface area of the composition can be increased at least 40% or at least 50% after calcination at 1000 °C for 10 hours under air. In some embodiments, the specific surface area of the composition can be increased at least 60% or at least 70% after calcination at 1000 °C for 10 hours under air. In other embodiments, the specific surface area of the composition can be increased at least 80% at least 90%, at least 100%, or at least 105% after calcination at 1000 °C for 10 hours under air.

Another aspect of the present disclosure is directed to a composition comprising a ceria-zirconia mixed oxide, a rare earth metal oxide, and a platinum group metal (PGM) component, wherein the specific surface area of the composition is increased at least 20% after calcination at 1100 °C for 10 hours under air, in comparison with a mixture of the ceria-zirconia mixed oxides and the PGM component, and wherein the rare earth metal oxide is Nd₂O₃, Y₂O₃, Pr₆O₁₁, or a mixture thereof.

The composition comprises 2-20 wt.% of the rare earth metal oxide, based on the total weight of the composition. More preferably, the composition comprises 5-15 wt.% of the rare earth metal oxide, based on the total weight of the composition. Most preferably, the composition can comprise 8-12 wt.% of the rare earth metal oxide based on the total weight of the composition.

Preferably, the rare earth metal oxide is selected from the group consisting of Pr₆O₁₁, Nd₂O₃, Y₂O₃, and a mixture thereof. More preferably, the rare earth metal oxide is Nd₂O₃, Y₂O₃, or a mixture thereof. Most preferably, the rare earth metal oxide is Nd₂O₃.

The rare earth metal oxide has an average diameter (d₅₀) of more than 100 nm. The average diameter of the rare earth metal oxide in the composition can be at least or more than 500 nm. In some embodiments, the average diameter of the rare earth metal oxide in the composition can be at least or more than 1 µm, 2 µm, 3 µm, 4 µm, 5 µm, or 6 µm. In other embodiments, the average diameter of the rare earth metal oxide in the composition can be at least or more than 7 µm. In yet other embodiments, the average diameter of the rare earth metal oxide in the composition can be at least or more than 8 µm.

The ceria-zirconia mixed oxide can have a molar ratio of zirconia to ceria from 9:1 to 1:9; preferably, from 8:2 to 2:8; more preferably, from 7:3 to 3:7.

The PGM is preferably selected from the group consisting of palladium, platinum, rhodium, and mixtures thereof. Particularly preferably, the PGM is palladium.

The composition preferably comprises 0.03 to 10 weight percent of the PGM; more preferably, 0.03 to 7 weight percent of the PGM; and most preferably, 0.03 to 4 weight percent of the PGM; based on the weight of the composition.

In the embodiments wherein the PGM is palladium, the composition preferably comprises 0.03 to 10 weight percent of palladium; more preferably, 0.03 to 7 weight percent of palladium; and most preferably, 0.03 to 4 weight percent of palladium; based on the weight of the composition.

The specific surface area of the composition can be increased at least 40% or at least 50% after calcination at 1100 °C for 10 hours under air. In some embodiments, the specific surface area of the composition can be increased at least 60% or at least 70% after calcination at 1100 °C for 10 hours under air. In other embodiments, the specific surface area of the composition can be increased at least 80% at least 90%, at least 100%, or at least 110% after calcination at 1100 °C for 10 hours under air.

Another aspect of the present disclosure is directed to a composition comprising a ceria-zirconia mixed oxide, a rare earth metal oxide, and a platinum group metal (PGM) component, wherein the specific surface area of the composition is increased at least 10% after calcination at 1000 °C for 10 hours under redox conditions, in comparison with a mixture of the ceria-zirconia mixed oxides and the PGM component, and wherein the rare earth metal oxide is Nd₂O₃, Y₂O₃, Pr₆O₁₁, or a mixture thereof.

The composition comprises 2-20 wt.% of the rare earth metal oxide, based on the total weight of the composition. More preferably, the composition comprises 5-15 wt.% of the rare earth metal oxide, based on the total weight of the composition. Most preferably, the composition can comprise 8-12 wt.% of the rare earth metal oxide based on the total weight of the composition.

Preferably, the rare earth metal oxide is selected from the group consisting of Pr₆O₁₁, Nd₂O₃, Y₂O₃, and a mixture thereof. More preferably, the rare earth metal oxide is Nd₂O₃, Y₂O₃, or a mixture thereof. Most preferably, the rare earth metal oxide is Nd₂O₃.

The rare earth metal oxide has an average diameter (d₅₀) of more than 100 nm. The average diameter of the rare earth metal oxide in the composition can be at least or more than 500 nm. In some embodiments, the average diameter of the rare earth metal oxide in the composition can be at least or more than 1 µm, 2 µm, 3 µm, 4 µm, 5 µm, or 6 µm. In other embodiments, the average diameter of the rare earth metal oxide in the composition can be at least or more than 7 µm. In yet other embodiments, the average diameter of the rare earth metal oxide in the composition can be at least or more than 8 µm.

The ceria-zirconia mixed oxide can have a molar ratio of zirconia to ceria from 9:1 to 1:9; preferably, from 8:2 to 2:8; more preferably, from 7:3 to 3:7.

The PGM is preferably selected from the group consisting of palladium, platinum, rhodium, and mixtures thereof. Particularly preferably, the PGM is palladium.

The composition preferably comprises 0.03 to 10 weight percent of the PGM, more preferably 0.03 to 7 weight percent of the PGM, and most preferably 0.03 to 4 weight percent of the PGM; based on the weight of the composition.

In the embodiments wherein the PGM is palladium, the composition preferably comprises 0.03 to 10 weight percent of palladium, more preferably 0.03 to 7 weight percent of palladium, and most preferably 0.03 to 4 weight percent of palladium, based on the weight of the composition.

The specific surface area of the composition can be increased at least 20% or at least 30% after calcination at 1000 °C for 10 hours under redox conditions. In some embodiments, the specific surface area of the composition can be increased at least 40% or at least 50% after calcination at 1000 °C for 10 hours under redox conditions. In other embodiments, the specific surface area of the composition can be increased at least 60% or at least 70% after calcination at 1000 °C for 10 hours under redox conditions.

Another aspect of the present disclosure is directed to a composition comprising a ceria-zirconia mixed oxide, a rare earth metal oxide, and a platinum group metal (PGM) component, wherein the specific surface area of the composition is increased at least 10% after calcination at 1100 °C for 10 hours under redox conditions, in comparison with a mixture of the ceria-zirconia mixed oxides and the PGM component, and wherein the rare earth metal oxide is Nd₂O₃, Y₂O₃, Pr₆O₁₁, or a mixture thereof.

The composition comprises 2-20 wt.% of the rare earth metal oxide, based on the total weight of the composition. More preferably, the composition comprises 5-15 wt.% of the rare earth metal oxide, based on the total weight of the composition. Most preferably, the composition can comprise 8-12 wt.% of the rare earth metal oxide based on the total weight of the composition.

Preferably, the rare earth metal oxide is selected from the group consisting of Pr₆O₁₁, Nd₂O₃, Y₂O₃, and a mixture thereof. More preferably, the rare earth metal oxide is Nd₂O₃, Y₂O₃, or a mixture thereof. Most preferably, the rare earth metal oxide is Nd₂O₃.

The rare earth metal oxide has an average diameter (d₅₀) of more than 100 nm. The average diameter of the rare earth metal oxide in the composition can be at least or more than 500 nm. In some embodiments, the average diameter of the rare earth metal oxide in the composition can be at least or more than 1 µm, 2 µm, 3 µm, 4 µm, 5 µm, or 6 µm. In other embodiments, the average diameter of the rare earth metal oxide in the composition can be at least or more than 7 µm. In yet other embodiments, the average diameter of the rare earth metal oxide in the composition can be at least or more than 8 µm.

The ceria-zirconia mixed oxide can have a molar ratio of zirconia to ceria from 9:1 to 1:9; preferably, from 8:2 to 2:8; more preferably, from 7:3 to 3:7.

The PGM is preferably selected from the group consisting of palladium, platinum, rhodium, and mixtures thereof. Particularly preferably, the PGM is palladium.

The composition preferably comprises 0.03 to 10 weight percent of the PGM, more preferably 0.03 to 7 weight percent of the PGM, and most preferably 0.03 to 4 weight percent of the PGM; based on the weight of the composition.

In the embodiments wherein the PGM is palladium, the composition preferably comprises 0.03 to 10 weight percent of palladium, more preferably 0.03 to 7 weight percent of palladium, and most preferably 0.03 to 4 weight percent of palladium, based on the weight of the composition.

The specific surface area of the composition can be increased at least 20% or at least 30% after calcination at 1100 °C for 10 hours under redox conditions. In some embodiments, the specific surface area of the composition can be increased at least 40% or at least 50% after calcination at 1100 °C for 10 hours under redox conditions. In other embodiments, the specific surface area of the composition can be increased at least 60% or at least 70% after calcination at 1100 °C for 10 hours under redox conditions.

### DEFINTIONS

The term "region" as used herein refers to an area on a substrate, typically obtained by drying and/or calcining a washcoat. A "region" can, for example, be disposed or supported on a substrate as a "layer" or a "zone". The area or arrangement on a substrate is generally controlled during the process of applying the washcoat to the substrate. The "region" typically has distinct boundaries or edges (i.e. it is possible to distinguish one region from another region using conventional analytical techniques).

Typically, the "region" has a substantially uniform length. The reference to a "substantially uniform length" in this context refers to a length that does not deviate (e.g. the difference between the maximum and minimum length) by more than 10 %, preferably does not deviate by more than 5 %, more preferably does not deviate by more than 1 %, from its mean value.

It is preferable that each "region" has a substantially uniform composition (i.e. there is no substantial difference in the composition of the washcoat when comparing one part of the region with another part of that region). Substantially uniform composition in this context refers to a material (e.g. region) where the difference in composition when comparing one part of the region with another part of the region is 5% or less, usually 2.5% or less, and most commonly 1% or less.

The term "zone" as used herein refers to a region having a length that is less than the total length of the substrate, such as ≤ 75 % of the total length of the substrate. A "zone" typically has a length (i.e. a substantially uniform length) of at least 5% (e.g. ≥ 5 %) of the total length of the substrate.

The total length of a substrate is the distance between its inlet end and its outlet end (e.g. the opposing ends of the substrate).

Any reference to a "zone disposed at an inlet end of the substrate" used herein refers to a zone disposed or supported on a substrate where the zone is nearer to an inlet end of the substrate than the zone is to an outlet end of the substrate. Thus, the midpoint of the zone (i.e. at half its length) is nearer to the inlet end of the substrate than the midpoint is to the outlet end of the substrate. Similarly, any reference to a "zone disposed at an outlet end of the substrate" used herein refers to a zone disposed or supported on a substrate where the zone is nearer to an outlet end of the substrate than the zone is to an inlet end of the substrate. Thus, the midpoint of the zone (i.e. at half its length) is nearer to the outlet end of the substrate than the midpoint is to the inlet end of the substrate.

When the substrate is a wall-flow filter, then generally any reference to a "zone disposed at an inlet end of the substrate" refers to a zone disposed or supported on the substrate that is:
(a) nearer to an inlet end (e.g. open end) of an inlet channel of the substrate than the zone is to a closed end (e.g. blocked or plugged end) of the inlet channel, and/or
(b) nearer to a closed end (e.g. blocked or plugged end) of an outlet channel of the substrate than the zone is to an outlet end (e.g. open end) of the outlet channel.
Thus, the midpoint of the zone (i.e. at half its length) is (a) nearer to an inlet end of an inlet channel of the substrate than the midpoint is to the closed end of the inlet channel, and/or (b) nearer to a closed end of an outlet channel of the substrate than the midpoint is to an outlet end of the outlet channel.

Similarly, any reference to a "zone disposed at an outlet end of the substrate" when the substrate is a wall-flow filter refers to a zone disposed or supported on the substrate that is:
(a) nearer to an outlet end (e.g. an open end) of an outlet channel of the substrate than the zone is to a closed end (e.g. blocked or plugged) of the outlet channel, and/or
(b) nearer to a closed end (e.g. blocked or plugged end) of an inlet channel of the substrate than it is to an inlet end (e.g. an open end) of the inlet channel.
Thus, the midpoint of the zone (i.e. at half its length) is (a) nearer to an outlet end of an outlet channel of the substrate than the midpoint is to the closed end of the outlet channel, and/or (b) nearer to a closed end of an inlet channel of the substrate than the midpoint is to an inlet end of the inlet channel.

A zone may satisfy both (a) and (b) when the washcoat is present in the wall of the wall-flow filter (i.e. the zone is in-wall).

The term "washcoat" is well known in the art and refers to an adherent coating that is applied to a substrate usually during production of a catalyst.

The acronym "PGM" as used herein refers to "platinum group metal". The term "platinum group metal" generally refers to a metal selected from the group consisting of Ru, Rh, Pd, Os, Ir and Pt, preferably a metal selected from the group consisting of Ru, Rh, Pd, Ir and Pt. In general, the term "PGM" preferably refers to a metal selected from the group consisting of Rh, Pt and Pd.

The term "mixed oxide" as used herein generally refers to a mixture of oxides in a single phase, as is conventionally known in the art. The term "composite oxide" as used herein generally refers to a composition of oxides having more than one phase, as is conventionally known in the art.

The expression "consist essentially" as used herein limits the scope of a feature to include the specified materials, and any other materials or steps that do not materially affect the basic characteristics of that feature, such as for example minor impurities. The expression "consist essentially of" embraces the expression "consisting of".

The expression "substantially free of" as used herein with reference to a material, typically in the context of the content of a region, a layer or a zone, means that the material in a minor amount, such as ≤ 5 % by weight, preferably ≤ 2 % by weight, more preferably ≤ 1 % by weight. The expression "substantially free of" embraces the expression "does not comprise."

The expression "essentially free of" as used herein with reference to a material, typically in the context of the content of a region, a layer or a zone, means that the material in a trace amount, such as ≤ 1 % by weight, preferably ≤ 0.5 % by weight, more preferably ≤ 0.1 % by weight. The expression "essentially free of" embraces the expression "does not comprise."

Any reference to an amount of dopant, particularly a total amount, expressed as a % by weight as used herein refers to the weight of the support material or the refractory metal oxide thereof.

The term "loading" as used herein refers to a measurement in units of g/ft³ on a metal weight basis.

The term "redox" as used herein refers to gas mixtures alternating between reducing atmosphere and oxidizing atmosphere.

The following examples merely illustrate the invention. Those skilled in the art will recognize many variations that are within the spirit of the invention and scope of the claims.

### EXAMPLES

Example 1 (Comparative): Catalyst 1 is a CeZr mixed oxide with a Ce to Zr mole ratio 1:1.
Example 2 (Comparative): Catalyst 2 was prepared by impregnate Nd(NO₃)₃ solution on the CeZr mixed oxide of Catalyst 1. The Nd loading was 10% in weight (calculated as Nd₂O₃), based on the total weight of Catalyst 2.
Example 3: Catalyst 3 is a physical mixture of the CeZr mixed oxide of Catalyst 1 and Nd₂O₃. The particle sizes of both materials are about 5µm in D₅₀. The weight ratio of the two materials was 90:10.
Example 4: Catalyst 4 is a physical mixture of the CeZr mixed oxide of Catalyst 1 and Y₂O₃. The particle sizes of both materials are about 5µm in D₅₀. The weight ratio of the two materials is 90:10.
Example 5: Powder samples of Examples 1-4 were placed in a muffle furnace and treated in air at 1000 °C or 1100 °C for 10 hours. BET surface areas of the samples after the treatment were measured and are reported in **Table 1.**
Example 6: Powder samples of Examples 1-4 were placed in a tube furnace. The feed gas was altered between lean and rich conditions every 5 minutes. The lean gas mixtures contained 1% O₂, 10% H₂O, 20ppm SO₂, and balanced with air. The rich gas mixture contained 0.5% CO, 10% H₂O, 20 ppm SO, and balanced with air. The samples were treated at 1000 °C or 1100 °C for 10 hours. BET surface areas of the samples after the treatment were measured and are also reported in **Table 1.**

**Table 1 Specific Surface Area (BET) after various conditions**

| Conditions | Example 1 BET (m²/g) | Example 2 BET (m²/g) | Example 3 BET (m²/g) | Example 4 BET (m²/g) |
|---|---|---|---|---|
| 1000 °C 10hrs air | 12.75 | 14.39 | 19.89 | 16.33 |
| 1100 °C 10hrs air | 5.91 | 3.50 | 7.65 | 7.09 |
| 1000 °C 10hrs redox | 12.97 | 12.25 | 17.38 | 14.89 |
| 1100 °C 10hrs redox | 2.52 | 1.22 | 3.67 | 2.72 |

Example 7 (Comparative): Pd nitrate was impregnated on to the CeZr mixed oxide of Example 1. The sample was dried and the final powders were calcined at 500 °C for 2hrs. The Pd loading was 1 wt.%.
Example 8 (Comparative): Pd nitrate was impregnated on to the powder samples of Example 2. The sample was dried and the final powders were calcined at 500 °C for 2hrs. The Pd loading was 1 wt.%.
Example 9: Pd nitrate was added into the physical mixture of Example 3 to form a slurry. The slurry was dried and the final powders were calcined at 500 °C for 2hrs. The Pd loading was 1 wt.%.
Example 10: Pd nitrate was added into the physical mixture of Example 4 to form a slurry. The slurry was dried and the final powders were calcined at 500 °C for 2hrs. The Pd loading was 1 wt.%.
Example 11: Powder samples of Examples 7-10 were subjected to the same treatments as described in Example 5 and Example 6. BET surface areas of the treated samples were measured and are reported in **Table 2.**

**Table 2 Specific Surface Area (BET) after various conditions**

| Conditions | Example 7 BET (m²/g) | Example 8 BET (m²/g) | Example 9 BET (m²/g) | Example 10 BET (m²/g) |
|---|---|---|---|---|
| 1000 °C 10hrs air | 8.75 | 11.47 | 18.22 | 22.37 |
| 1100 °C 10hrs air | 2.64 | 1.77 | 7.18 | 5.12 |
| 1000 °C 10hrs redox | 10.50 | 10.76 | 18.27 | 16.63 |
| 1100 °C 10hrs redox | 2.22 | 1.15 | 4.12 | 4.26 |

### Experimental results

Example 12 (Comparative): Catalyst 12 is a commercial three-way (Pd-Rh) catalyst with a doublelayered structure. The bottom layer consists Pd supported on a washcoat of a first CeZr mixed oxide, La-stabilized alumina, Ba promotor, and boehmite binder. The washcoat loading was about 1.6 g/in³ with a Pd loading of 1 g/ft³. The top layer consists of Rh supported on a washcoat of a second CeZr mixed oxide, La-stabilized alumina. The washcoat lading was about 1.4 g/in³ with a Rh loading of 2 g/ft³. The total catalyst loading was about 3.0 g/in³.
Example 13: Catalyst 13 was prepared similar to Catalyst 12, except that powders of Nd₂O₃ oxide with particle sizes of D₅₀~7 µm were also added into the slurry of Pd nitrate, a first CeZr mixed oxide, La-stabilized alumina, Ba promotor, and boehmite binder. The amount of Nd₂O₃ added was about 10% in weight of the CeZr mixed oxide.
Example 14: Catalyst 12 and Catalyst 13, coated on the same substrate type, cpsi and dimensions were aged using a gasoline engine under standard lean, rich, stoichiometric cycling TWC aging conditions. Catalyst 12 and Catalyst 13 were then performance tested for light off temperature on a gasoline engine and evaluated over repeated FTP-75 cycles on a gasoline vehicle.

### Example 15:

The HC, CO and NOₓ T₅₀ light off temperatures of Catalyst 12 and Catalyst 13 are shown in **Table 3.** This data indicates that the increased thermal durability of Catalyst 13 gives significantly improved light off performance relative to the standard TWC example of Catalyst 12.

**Table 3: Engine Bench Light Off Test Results**

| Pollutant | T₅₀ (°C) | T₅₀ (°C) |
|---|---|---|
| | Catalyst 12 | Catalyst 13 |
| HC | 412 | 397 |
| CO | 405 | 392 |
| NOₓ | 406 | 392 |

### Example 16:

The HC, CO and NOₓ conversion performance averaged over repeated FTP cycles is shown in **Table 4.** The data indicates that the increased thermal durability of Catalyst 13 gives significantly improved emissions relative to the standard TWC example of Catalyst 12.

**Table 4: Vehicle performance**

| Pollutant | FTP Emissions (g/mile) Catalyst 12 | FTP Emissions (g/mile) Catalyst 13 |
|---|---|---|
| NMHC | 0.053 | 0.047 |
| CO | 1.65 | 1.15 |
| NOₓ | 0.083 | 0.052 |

## Claims

1. A catalyst article for treating exhaust gas comprising:
a substrate; and
a catalytic region on the substrate;
wherein the catalytic region comprises a first platinum group metal (PGM) component, an oxygen storage component (OSC) material, a rare earth metal oxide, and an inorganic oxide;
wherein the OSC material is selected from the group consisting of cerium oxide, a ceria-zirconia mixed oxide, and an alumina-ceria-zirconia mixed oxide;
wherein the rare earth metal oxide is Pr₆O₁₁, Nd₂O₃, Y₂O₃, or a mixture thereof;
wherein the rare earth metal oxide is in the range of 2-20% of the weight of the OSC material;
wherein the rare earth metal oxide has an average diameter (d₅₀) of more than 100 nm; and
wherein the rare earth metal oxide is incorporated into the catalytic region as the rare earth metal oxide by physical blend.

2. The catalyst article of claim 1, wherein the first PGM component is selected from the group consisting of platinum, palladium, rhodium, and a mixture thereof.

3. The catalyst article of claim 1 or claim 2, wherein the first PGM component is palladium.

4. The catalyst article of claim 3, wherein the palladium loading is ranged from 0.03-10 wt.%, based on the total weight of the catalytic region.

5. The catalyst article of claim 1, wherein the OSC material is a ceria-zirconia mixed oxide.

6. The catalyst article of any one of the preceding claims, wherein the rare earth metal oxide is Nd₂O₃.

7. The catalyst article of any one of the preceding claims, wherein the catalytic region further comprises a second PGM component.

8. The catalyst article of claim 7, wherein the second PGM component is selected from the group consisting of platinum, palladium, rhodium, and a mixture thereof.

9. The catalyst article of claim 8, wherein the first PGM component is palladium and the second PGM component is rhodium.

10. The catalyst article of claim 9, wherein the palladium component and the rhodium component have a weight ratio of from 200:1 to 1:200.

11. The catalyst article of any one of claims 1 to 6, wherein the first PGM component is palladium, and the catalytic region is essentially free of PGM metals other than the palladium component.

## Patentansprüche

1. Katalysatorerzeugnis zum Behandeln von Abgas, umfassend:
ein Substrat; und
eine katalytische Region auf dem Substrat;
wobei die katalytische Region eine erste Platingruppenmetallkomponente (PGM-Komponente), ein Sauerstoffspeicherkomponentenmaterial (OSC-Material), ein Seltenerdmetalloxid und ein anorganisches Oxid umfasst;
wobei das OSC-Material aus der Gruppe ausgewählt ist, bestehend aus Cerdioxid, einem Cerdioxid-Zirkoniumoxid-Mischoxid und einem Aluminiumoxid-Cerdioxid-Zirkoniumoxid-Mischoxid;
wobei das Seltenerdmetalloxid Pr₆O₁₁, Nd₂O₃, Y₂O₃ oder eine Mischung davon ist;
wobei das Seltenerdmetalloxid in dem Bereich von 2-20 % des Gewichts des OSC-Materials liegt;
wobei das Seltenerdmetalloxid einen durchschnittlichen Durchmesser (d₅₀) von mehr als 100 nm aufweist; und
wobei das Seltenerdmetalloxid in die katalytische Region als das Seltenerdmetalloxid durch ein physikalisches Gemisch eingebunden ist.

2. Katalysatorerzeugnis nach Anspruch 1, wobei die erste PGM-Komponente aus der Gruppe ausgewählt ist, bestehend aus Platin, Palladium, Rhodium und einer Mischung davon.

3. Katalysatorerzeugnis nach Anspruch 1 oder 2, wobei die erste PGM-Komponente Palladium ist.

4. Katalysatorerzeugnis nach Anspruch 3, wobei die Palladiumbeladung in dem Bereich von 0,03-10 Gew.-%, basierend auf dem Gesamtgewicht der katalytischen Region, liegt.

5. Katalysatorerzeugnis nach Anspruch 1, wobei das OSC-Material ein Cerdioxid-Zirkoniumoxid-Mischoxid ist.

6. Katalysatorerzeugnis nach einem der vorstehenden Ansprüche, wobei das Seltenerdmetalloxid Nd₂O₃ ist.

7. Katalysatorerzeugnis nach einem der vorstehenden Ansprüche, wobei die katalytische Region ferner eine zweite PGM-Komponente umfasst.

8. Katalysatorerzeugnis nach Anspruch 7, wobei die zweite PGM-Komponente aus der Gruppe ausgewählt ist, bestehend aus Platin, Palladium, Rhodium und einer Mischung davon.

9. Katalysatorerzeugnis nach Anspruch 8, wobei die erste PGM-Komponente Palladium ist und die zweite PGM-Komponente Rhodium ist.

10. Katalysatorerzeugnis nach Anspruch 9, wobei die Palladiumkomponente und die Rhodiumkomponente ein Gewichtsverhältnis von 200 : 1 bis 1 : 200 aufweisen.

11. Katalysatorerzeugnis nach einem der Ansprüche 1 bis 6, wobei die erste PGM-Komponente Palladium ist und die katalytische Region im Wesentlichen frei von anderen PGM-Metallen als der Palladiumkomponente ist.

## Revendications

1. Article catalyseur permettant de traiter un gaz d'échappement comprenant :
un substrat ; et
une région catalytique sur le substrat ;
dans lequel la région catalytique comprend un premier composant de métal du groupe du platine (PGM), un matériau de composant de stockage d'oxygène (OSC), un oxyde de métal de terres rares et un oxyde inorganique ;
dans lequel le matériau OSC est choisi dans le groupe constitué d'oxyde de cérium, un oxyde mixte de cérine-zircone, et un oxyde mixte d'alumine-céride ;
dans lequel l'oxyde de métal des terres rares est Pr₆O₁₁, Nd₂O₃, Y₂O₃, ou un mélange de ceux-ci ;
dans lequel l'oxyde de métal des terres rares est dans la plage de 2 à 20 % du poids du matériau OSC ;
dans lequel l'oxyde de métal des terres rares a un diamètre moyen (d₅₀) supérieur à 100 nm ; et
dans lequel l'oxyde de métal de terres rares est incorporé dans la région catalytique en tant qu'oxyde de métal de terres rares par mélange physique.

2. Article catalyseur selon la revendication 1, dans lequel le premier composant PGM est choisi dans le groupe constitué de platine, palladium, rhodium, et un mélange de ceux-ci.

3. Article catalyseur selon la revendication 1 ou la revendication 2, dans lequel le premier composant PGM est le palladium.

4. Article catalyseur selon la revendication 3, dans lequel la charge de palladium est comprise entre 0,03 et 10 % en poids, en fonction du poids total de la région catalytique.

5. Article catalyseur selon la revendication 1, dans lequel le matériau OSC est un oxyde mixte de cérium-zircone.

6. Article catalyseur selon l'une quelconque des revendications précédentes, dans lequel l'oxyde de métal des terres rares est Nd₂O₃.

7. Article catalyseur selon l'une quelconque des revendications précédentes, dans lequel la région catalytique comprend en outre un second composant PGM.

8. Article catalyseur selon la revendication 7, dans lequel le second composant PGM est choisi dans le groupe constitué de platine, palladium, rhodium, et un mélange de ceux-ci.

9. Article catalyseur selon la revendication 8, dans lequel le premier composant PGM est le palladium et le second composant PGM est le rhodium.

10. Article catalyseur selon la revendication 9, dans lequel le composant palladium et le composant rhodium ont un rapport pondéral allant de 200:1 à 1:200.

11. Article catalyseur selon l'une quelconque des revendications 1 à 6, dans lequel le premier composant PGM est le palladium, et la région catalytique est essentiellement exempte de métaux PGM autres que le composant palladium.
